# EUROPEAN PATENT APPLICATION

(11) **EP 2 328 298 A1**
(43) Date of publication of application: **01.06.2011**
(21) Application number: 10192363.9
(22) Date of filing: 24.11.2010
(51) Int. Cl.: H04L 12/12, H04W 84/04, H04W 52/02

(54) **Femto or home base station and power management method thereof**

(30) Priority: 25.11.2009 KR 20090114523
(71) Applicant: Pantech Co., Ltd., Seoul 121-270 (KR)
(72) Inventor: Ahn, Kyung Hyun, 122-060, Seoul (KR)
(74) Representative: Herzog, Markus

(57) **Abstract**

A small base station to provide a service wirelessly or through wires includes an operation mode management unit to determine an operating mode of the small base station. An operation method of the small base station may determine connection statuses of terminals, and may set an operation mode of a wireless communication unit as a sleep mode or an idle mode if all terminals registered in the small base station are connected to the small base station through wires. If there are registered terminals not located in the small base station cell area, the operation mode may be sleep mode. If there are terminals connected wirelessly to the small base station, the operation mode may be the active mode.

## Description

### CROSS-REFERENCE TO RELATED APPLICATION

This application claims priority from and the benefit of Korean Patent Application No. 10-2009-0114523, filed on November 25, 2009, which is hereby incorporated by reference for all purposes as if fully set forth herein.

### BACKGROUND

1. Field

This disclosure relate to a small base station, and a management method thereof.

2. Discussion of the Background

A femtocell may be a micro type/low-energy-consuming indoor base station used in a home/office. The femtocell may be similar to a picocell, however, the femtocell is used for indicating a base station having improved functionality. The femtocell is a small base station that is connected to a router, and may connect a 3G voice and 3G data in addition to a 2G voice and 2G data to a backbone network of a mobile communication network via a digital subscription line (DSL) link and the like.

A femto base station may have a coverage with a radius of several dozen meters unlike a macro base station located outdoors and having a coverage with a radius of several kilometers; and thus, there is a higher probability that only a small number of users may access the femto base station. In this instance, a power used for operating the femto base station may be directly provided indoors. Thus, it may be better to reduce the amount of power consumed by the femto base station. Also, in a location where a plurality of femto base stations are densely installed, each femto base station may affect, through interference, a terminal accessing a macro base station in an adjacent location or a terminal accessing another femto base station. Accordingly, it may be better to reduce an amount of interference occurring due to the femto base station.

### SUMMARY

Exemplary embodiments of the present invention provide a small base station that provides a service wirelessly or through wires, and a management method thereof.

Exemplary embodiments of the present invention also provide an operation method of a small base station that switches an operation mode into an idle mode or a sleep mode if no terminal registered in the small base station is wirelessly connected to the small base station or located in a cell area of the small base station.

Additional features of the invention will be set forth in the description which follows, and in part will be apparent from the description, or may be learned by practice of the invention.

An exemplary embodiment provides a method of operating a small base station, the method including determining connection statuses of terminals connected to the small base station; and setting an operation mode of the small base station as a sleep mode or an idle mode if there are no terminals wirelessly connected to the small base station.

An exemplary embodiment provides a small base station including a wireless communication unit to provide a communication service to a wirelessly connected terminal; a wired communication unit to provide the communication service to a terminal connected through wires; and an operation mode management unit to determine connection statuses of terminals , to determine an operation mode of the wireless communication unit based on the connection statuses of the terminals, and to operate the small base station in the determined operation mode.

It is to be understood that both the foregoing general description and the following detailed description are exemplary and explanatory and are intended to provide further explanation of the invention as claimed

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1A, FIG. 1B, and FIG. 1C are diagrams illustrating examples in which a small base station sets an operation mode according to an exemplary embodiment of the present invention.

FIG. 2 is a diagram illustrating a small base station according to an exemplary embodiment of the present invention.

FIG. 3 is a flowchart illustrating a method for operating a small base station according to an exemplary embodiment of the present invention.

FIG. 4 is a flowchart illustrating a method for operating a small base station according to an exemplary embodiment of the present invention.

FIG. 5 is a flowchart illustrating a method for operating a small base station according to an exemplary embodiment of the present invention.

### DETAILED DESCRIPTION OF THE ILLUSTRATED EMBODIMENTS

The invention is described more fully hereinafter with reference to the accompanying drawings, in which exemplary embodiments of the invention are shown. This disclosure may, however, be embodied in many different forms and should not be construed as limited to the exemplary embodiments set forth herein. Rather, these exemplary embodiments are provided so that this disclosure is thorough, and will convey the scope of the invention to those skilled in the art. In the drawings, the size and relative sizes of layers and regions may be exaggerated for clarity. Like reference numerals in the drawings denote like elements.

It will be understood that when an element is referred to as being "connected to" another element, it can be directly connected to the other element, or intervening elements may be present.

An exemplary embodiment of the present invention provides a small base station that may provide a service wirelessly or through wires, and the small base station that may operate in a sleep mode or an idle mode if all terminals registered in the small base station are connected to the small base station through wires, or if no terminals are located in a cell area of the small base station.

The small base station described herein may be a femto base station, a home base station, or the like that provides a mobile communication service or an Internet Protocol (IP) communication service wirelessly or through wires.

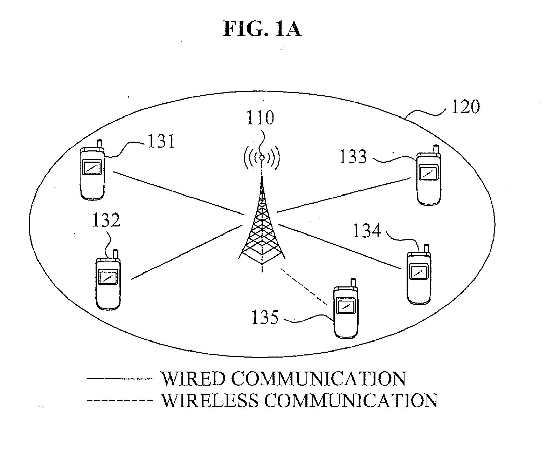

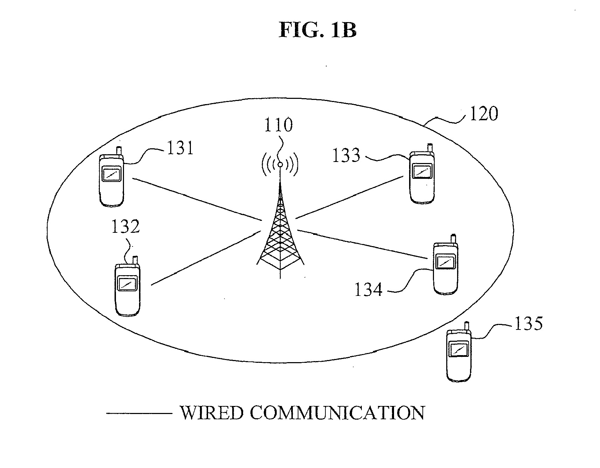

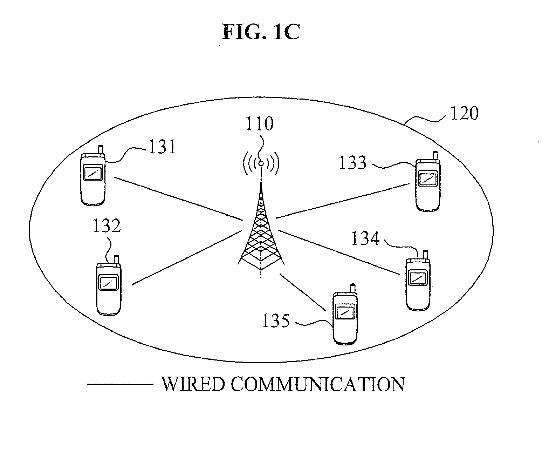

FIG. 1A, FIG. 1B, and FIG. 1C illustrate examples in which a small base station sets an operation mode according to an exemplary embodiment of the present invention. Referring to FIG. 1A, FIG. 1B, and FIG. 1 C, a small base station 110 may provide a mobile communication service or an Internet Protocol (IP) communication service to registered terminals wirelessly or through wires in a cell area 120.

FIG. 1A illustrates a case in which a wirelessly connected terminal is present in the cell area of the small base station. In FIG. 1A, the small base station 110 operates in an active mode and is wirelessly connected to a terminal 135 that wirelessly operates in a cell area 120 of the small base station. The small base station 110 is also connected through wires to terminals 131, 132, 133, and 134. The active mode is an operation mode of the small base station 110 that continuously provides a power to a wireless communication unit of the small base station 110.

FIG. 1B illustrates a case in which the terminals in the cell area are connected to the small base station 110 through wires, and a registered terminal is present outside the cell area 120. In this instance, only terminals 131, 132, 133, and 134 that are connected to the small base station 110 through wires are present, and thus, a wireless communication may not be used in the cell area 120. Accordingly, although a power supplied to the wireless communication unit of the small base station 110 is shut off, operation through the wired connections will continue normally. However, a terminal 135 registered in the small base station 110 is present outside the cell area 120, and thus, the small base station 110 operates in a sleep mode. The sleep mode is an operation mode that shuts off the power supplied to the wireless communication unit of the small base station 110 and provides the power at intervals to determine whether a newly entered terminal exists.

FIG. 1C illustrates a case in which all terminals registered in the small base station 110 are connected to the small base station through wires. In this instance, only terminals 131, 132, 133, 134, and 135 that communicate with the small base station 110 through wires are present in the cell area 120 of the small base station 110, and thus, a wireless communication may not be used in the cell area 120. Also, all the terminals 131 132, 133, 134, and 135 registered in the small base station 110 are connected to the small base station 110 through wires, and a terminal that uses a wireless communication is not newly entered. Thus, the small base station 110 may not operate in a sleep mode. Rather, the small base station 110 may operate in an idle mode. The idle mode is an operation mode of the small base station 110 that shuts off a power supplied to a wired communication unit of the small base station 110.

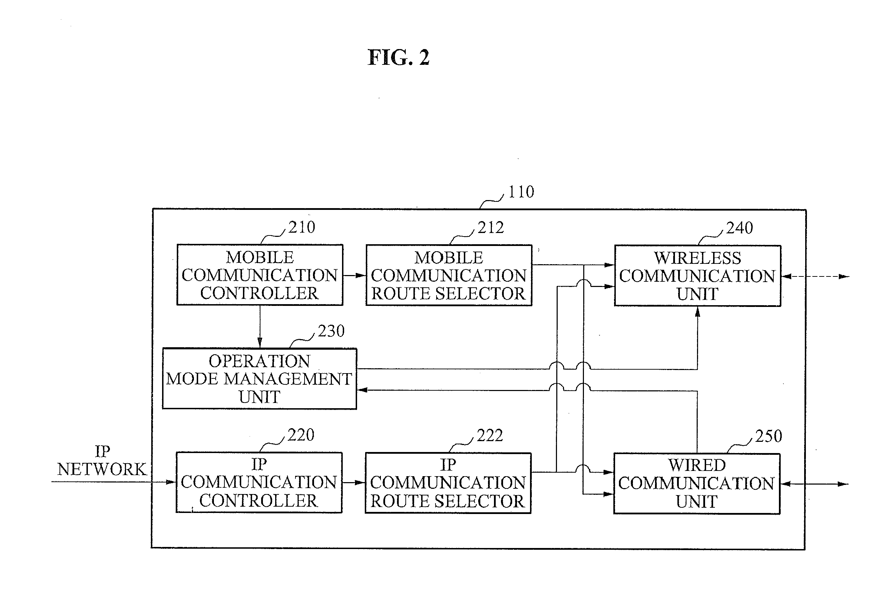

FIG. 2 illustrates a small base station according to an exemplary embodiment of the present invention. Referring to FIG. 2, the small base station 110 may include a mobile communication controller 210, a mobile communication route selector 212, an IP communication controller 220, an IP communication route selector 222, an operation mode management unit 230, a wireless communication unit 240, and a wired communication unit 250.

The mobile communication controller 210 may determine a handover to the cell area 120, and may provide a mobile communication service to a terminal in the cell area 120. The terminal may be registered in the small base station 210.

The mobile communication route selector 212 may select a communication unit to provide a service based on a connection status of the terminal. The mobile communication route selector 212 may provide the mobile communication service via the wireless communication unit 240 if the terminal is wirelessly connected to the small base station 110, and may provide the mobile communication service via the wired communication unit 250 if the terminal is connected to the small base station 110 through wires.

The IP communication controller 220 may provide an IP communication service to the terminal connected to the small base station 110.

The IP communication route selector 222 may select, based on the connection status of the terminal, a communication unit for providing the IP communication service. The IP communication route selector 222 may provide the IP communication service via the wireless communication unit 240 if the terminal is wirelessly connected to the small base station 110, and may provide the IP communication service via the wired communication unit 250 if the terminal is connected to the small base station 110 through wires.

The mobile communication route selector 212 and the IP communication route selector 222 may be constructed as a single device. However, as shown in FIG. 2, the mobile communication selector 212 and the IP communication route selector 222 are constructed as two different devices to provide separate functionality and may reduce the risk of a deterioration in performance.

The wireless communication unit 240 may wirelessly provide to the terminal in the cell area 120 the mobile communication service or the IP communication service.

The wired communication unit 250 may provide a wired service to the terminal in the cell area 120 the mobile communication service or the IP communication service.

The operation mode management unit 230 may determine a connection of the registered terminal via wired communication or wireless communication. The operation mode management unit 230 may detect an operation mode determination event, such as a connection status change of a terminal, a terminal entering a cell area 120 of the small base station 110, and the like. Further, the operation mode management unit 230 may change the operation mode of the small base station 120 in response to the detected operation mode determination event. The operation mode management unit 230 may determine a connection status of terminals connected to the small base station 110, may determine an operation mode based on the connection status of the terminals, and may control the small base station 110 based on the determined operation mode. If the operation mode management unit 230 determines a change in the connection status of the terminal connected to the small base station 110or a release of a connection from the small base station 110, the operation mode management unit 230 may determine an operation mode based on the connection status of the terminals and may enable the small base station 110 to be operated based on the determined operation mode. In this instance, the change of the connection status may include a change from a wired connection to a wireless connection, and a change from a wireless connection to a wired connection. The release of the connection of a wirelessly connected terminal may be determined based on whether a report is received in an adjusted period. Here, the adjusted period is a relatively short period compared with a general report period, and the adjusted period is used for more quickly sensing the release of the connection of the wirelessly connected terminal to reduce a power consumption of the small base station.

An operation mode set by the operation mode management unit 230 may include an active mode, an idle mode, and a sleep mode. Here, the active mode is an operation mode that continuously provides a power to the wireless communication unit 240 of the small base station 110. The idle mode is an operation mode that shuts off the power supplied to the wireless communication unit 240. The sleep mode is an operation mode that shuts off the power supplied to the wireless communication unit 240 of the small base station 110, but provides the power to the wireless communication unit 240 at intervals to determine whether a newly entered terminal exists.

If the operation mode management unit 230 determines, by the mobile communication controller 210, that a wirelessly connected terminal exists in the cell area 120, the operation mode management unit 230 may set the operation mode to enable the small base station 110 to be operated in the active mode. In this instance, the operation mode management unit 230 requests a report from the wirelessly connected terminal based on the adjusted period.

The operation mode management unit 230 may set the operation mode to enable the small base station 110 to be operated in the sleep mode or the idle mode, if it is determined by the wired communication unit 250 that all terminals registered in the small base station 110 are connected to the small base station 110 through wires.

The operation mode management unit 230 may set the operation mode to enable the small base station 110 to be operated in the sleep mode, if a connected terminal does not exist in the cell area 120 or only terminals connected to the small base station 110 through wires are present and some terminals registered in the small base station 110 are not present in the cell area 120.

The mobile communication controller 210 may receive a request for a mobile communication call connection to a terminal while the small base station 110 operates in the sleep mode or the idle mode. In this instance, since there may be a higher probability that a user of the terminal is using a wireless terminal, a change to the wireless connection may be more promptly performed. Accordingly, if the request for the mobile communication call connection is received during the sleep mode or the idle mode, the operation mode management unit 230 may change the operation mode into the active mode.

If the terminal is wirelessly connected to the small base station 110, the terminal wirelessly connected to the small base station 110 may transmit a report based on an adjusted period that is requested by the small base station 110.

If the terminal is connected to the small base station 110 through wires, the wireless communication device of the terminal may be operated in an idle mode.

If a request for mobile communication call connection is received through wires while the wireless communication device of the terminal is in the idle mode, the terminal may change the wireless communication device into the active mode, and may establish a wireless connection with the small base station 110 after or as a wired connection is released.

If the wired connection is released while the wireless communication device of the terminal is in the idle mode, the terminal may change the wireless communication device of the terminal to be in the active mode, and may establish the wireless connection with the small base station 110.

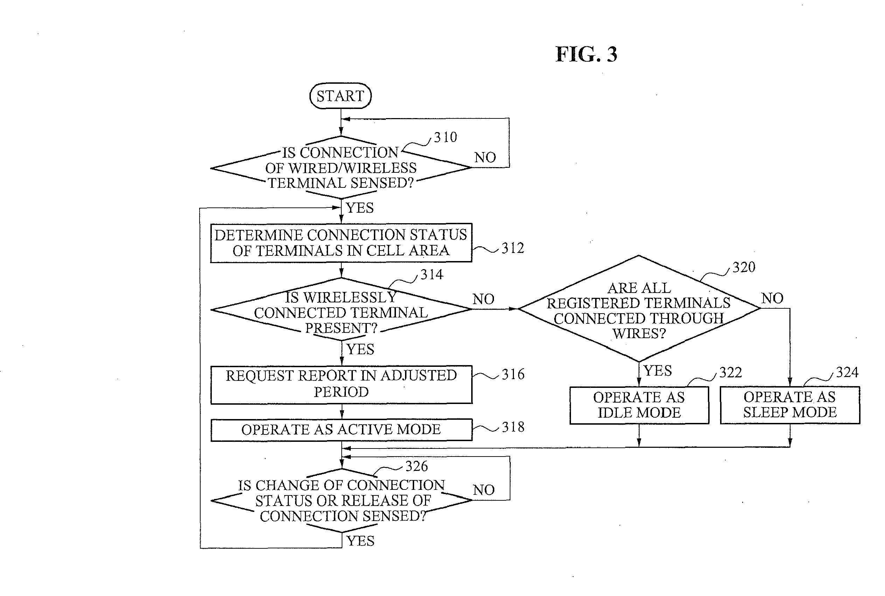

Hereinafter, a method according to an exemplary embodiment of the present invention as described above will be described with reference to attached drawings. FIG. 3 illustrates a method for operating a small base station according to an exemplary embodiment of the present invention. Referring to FIG. 3, if a wired connection or a wireless connection of a terminal is determined in operation 310, the small base station 110 determines a connection status of terminals in operation 312. A type of connection status may include a wired connection and a wireless connection.

The small base station 110 determines whether a wirelessly connected terminal is present in the cell area 120 in operation 314.

If the wirelessly connected terminal is determined to be present in the cell area 120 in operation 314, the small base station 110 requests a report from the wirelessly connected terminal based on an adjusted period in operation 316. In this instance, the adjusted period is relatively short compared with a general period, and the adjusted period is used for more quickly sensing a release of a connection of the wirelessly connected terminal to reduce the power consumption of the small base station 110.

The small base station 110 operates in an active mode in operation 318. The active mode is an operation mode that continuously provides a power to the wireless communication unit 240 of the small base station 110.

If the wirelessly connected terminal is determined to not be present in the cell area 120 in operation 314, the small base station 110 determines whether all terminals registered in the small base station 110 are connected to the small base station 110 through wires in operation 320.

If all the terminals registered in the small base station 110 are determined to be connected to the small base station 110 through wires in operation 320, the small base station 110 operates in an idle mode in operation 322. The idle mode is an operation mode that shuts off a power supplied to the wireless communication unit 240 of the small base station 110.

If all the terminals registered in the small base station 110 are determined to not be connected to the small base station 110 through wires in operation 320, the small base station 110 may operates in a sleep mode in operation 324. The sleep mode is an operation mode that shuts off the power supplied to the wireless communication unit 240 of the small base station 110, and provides the power at intervals to determine whether a registered terminal newly enters the cell area 120.

A case in which all the terminals registered in the small base station 110 are not connected through wires to the small base station 110 may correspond to one of a case in which one or more registered terminals are not present in the cell area 120, or a second case in which one or more registered terminals are wirelessly connected to the small base station 110. In this second case, one or more of the registered terminals may not be present in the cell area 120.

After operation 318, operation 322, and operation 324, if the small base station 110 determines a change of a connection status or a release of a connection in operation 326, the small base station 110 returns to operation 312 to repeat operations 312 through 324. Otherwise, operation 326 is performed again. In this instance, the change of the connection status may include a change from a wired connection to a wireless connection and a change from a wireless connection to a wired connection. The release of the connection of the wirelessly connected terminal may be determined based on whether a report is received on the adjusted period. If the report is not received, the small base station 110 may determine that the wirelessly connected terminal has departed from the cell area 120, and so the connection of the wirelessly connected terminal may be released.

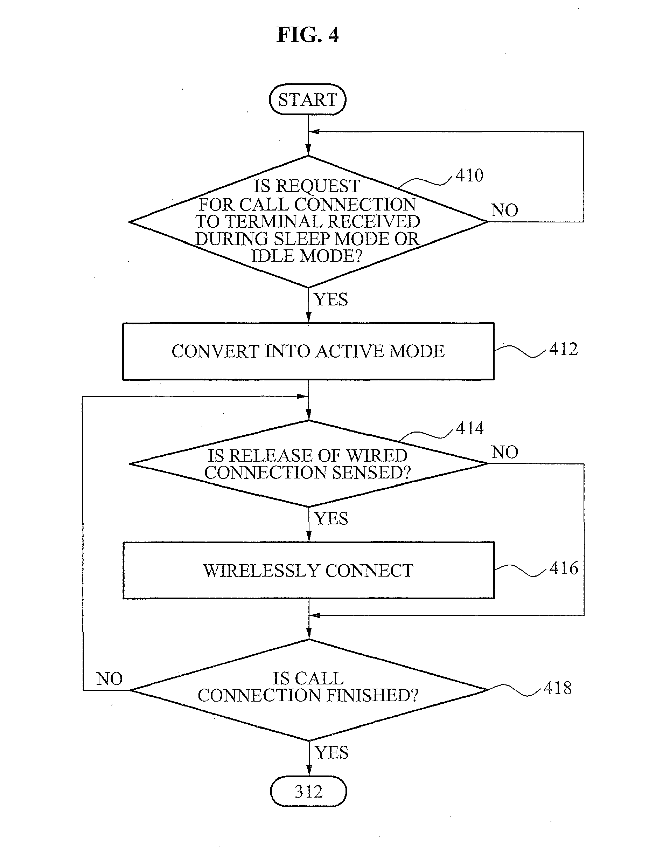

FIG. 4 illustrates a method for operating a small base station according to an exemplary embodiment of the present invention. Referring to FIG. 4, if the request for the call connection to a terminal is received during the sleep mode or the idle mode in operation 410, the small base station 110 may switch an operation mode into an active mode in operation 412.

Subsequently, the small base station 110 may determine whether a wired connection of the terminal is released in operation 414. If the wired connection of the terminal is released in operation 414, the small base station 110 may wirelessly connect the released terminal in operation 416. When the wired connection of the terminal is not released in operation 414, the small base station 110 may proceed to operation 418.

In operation 418, the small base station 110 may determine whether the call connection is finished. If the call connection is determined to not be finished in operation 418, the small base station 110 may return to operation 414 and may repeat operation 414 through operation 418. If the call connection is determined to be finished in operation 418, the small base station 110 may proceed to determining a connection status of terminals in operation 312 of FIG. 3.

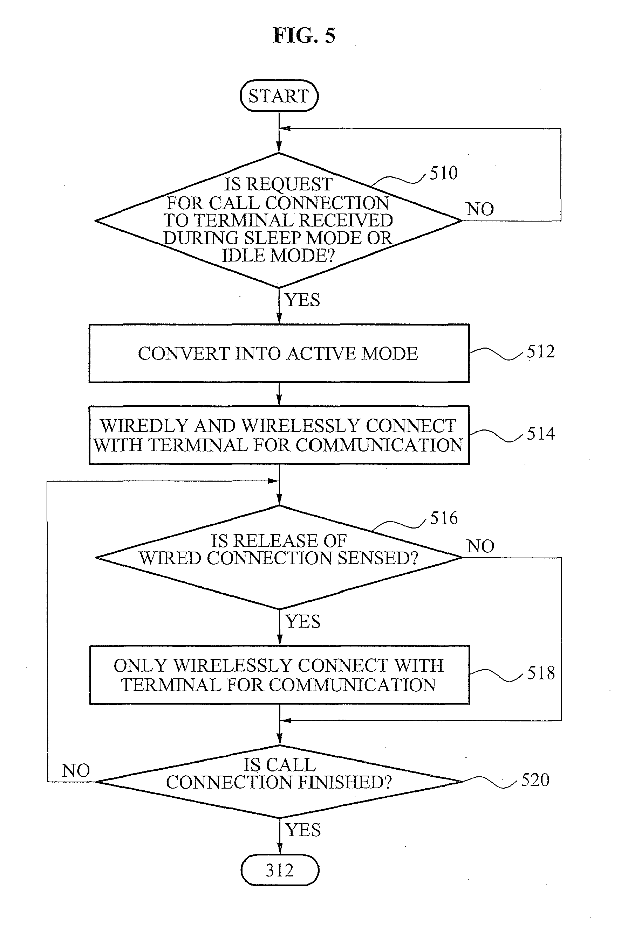

FIG. 5 illustrates a method for operating a small base station mode according to an exemplary embodiment of the present invention. Referring to FIG. 5, if the request for the call connection is received from a terminal during the sleep mode or the idle mode in operation 510, the small base station 110 may change an operation mode of the small base station 110 into an active mode in operation 512. Also, the small base station 110 may connect with a terminal wirelessly or through wires for a communication in operation 514.

Subsequently, the small base station 110 may determine whether a wired connection of the terminal is released in operation 516. If the wired connection of the terminal is released in operation 516, the small base station 110 may maintain the wireless connection of the terminal of which the wired connection is released so as to perform wireless communication. If the wired connection of the terminal is not released in operation 516, the small base station 110 may proceed to operation 520.

In operation 520, the small base station 110 may determine whether the call connection is finished. When the call connection is determined to not be finished in operation 520, the small base station 110 may proceed to operation 516, and may repeat operation 516 through operation 520. If the call connection is determined to be finished in operation 520, the small base station 110 may proceed to determining a connection status of terminals in operation 312 of FIG. 3.

The exemplary embodiments according to the present invention may be recorded in computer-readable media including program instructions to implement various operations embodied by a computer. The media may also include, alone or in combination with the program instructions, data files, data structures, and the like. The media and program instructions may be those specially designed and constructed for the purposes of the present invention, or they may be of the kind well-known and available to those having skill in the computer software arts. Examples of computer-readable media include magnetic media, such as hard disks, floppy disks, and magnetic tape; optical media, such as CD ROM disks and DVD; magneto-optical media, such as optical disks; hardware devices that are specially configured to store and perform program instructions, such as read-only memory (ROM), random access memory (RAM), flash memory, and the like, and combinations thereof. Examples of program instructions include both machine code, such as produced by a compiler, and files containing higher level code that may be executed by the computer using an interpreter. The described hardware devices may be configured to act as one or more software modules in order to perform the operations of the above-described embodiments of the present invention.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.
A small base station to provide a service wirelessly or through wires includes an operation mode management unit to determine an operating mode of the small base station. An operation method of the small base station may determine connection statuses of terminals, and may set an operation mode of a wireless communication unit as a sleep mode or an idle mode if all terminals registered in the small base station are wirelessly connected to the small base station. If there are registered terminals not located in the small base station cell area, the operation mode may be sleep mode. If there are terminals connected wirelessly to the small base station, the operation mode may be the active mode.

## Claims

1. A method for operating a small base station, the method comprising:
determining connection statuses of terminals connected to the small base station;
and
setting an operation mode of the small base station as a sleep mode or an idle mode if there are no terminals wirelessly connected to the small base station.

2. The method of claim 1, wherein, if a terminal registered in the small base station is newly connected to the small base station wirelessly or through wires, the small base station performs the determining of the connection statuses of the terminals connected to the small base station.

3. The method of claim 1 or 2, wherein, if a connection status of one of the terminals is changed or a connection is released, the small base station performs the determining of the connection statuses of the terminals connected to the small base station,
the change of the connection status of the one of the terminals preferably including a change from a wireless connection to a wired connection or a change from the wired connection to the wireless connection.

4. The method of claim 3, wherein the released connection includes a release of a connection of a wirelessly connected terminal, the release of the connection of the wirelessly connected terminal being determined based on whether a report from the terminal is received.

5. The method of any of claims 1 to 4, further comprising:
setting the operation mode of the small base station to an active mode if one of the terminals is determined to be wirelessly connected to the small base station,
and, preferably, requesting a report from the wirelessly connected terminal based on an adjusted period.

6. The method of any of claims 1 to 5, further comprising:
setting the operation mode as the sleep mode
either
if the connection statuses of terminals connected to the small base station are determined to be connected to the small base station through wires, and no terminal registered in the small base station is located in a cell area of the small base station,
or
if the connection statuses are determined to be that no terminal is connected to the small base station and no terminal registered in the small base station is located in a cell area of the small base station.

7. The method of any of claims 1 to 6, further comprising
switching the operation mode into an active mode if a request for a call connection to a terminal is received during the sleep mode or the idle mode; and
connecting the small base station and a terminal wirelessly or through wires for communication.

8. A small base station, comprising:
a wireless communication unit to provide a communication service to a wirelessly connected terminal;
a wired communication unit to provide the communication service to a terminal connected through wires; and
an operation mode management unit to determine connection statuses of terminals, to determine an operation mode of the wireless communication unit based on the connection statuses of the terminals, and to operate the small base station in the determined operation mode.

9. The small base station of claim 8, wherein the operation mode management unit sets the operation mode as a sleep mode or an idle mode if there are not terminals wirelessly connected to the small base station.

10. The small base station of claim 8 or 9, wherein the operation mode management unit sets the operation mode as an active mode if it is determined by the operation mode management unit that a terminal is wirelessly connected to the small base station,
the operation mode management unit preferably requesting a report from the wirelessly connected terminal based on an adjusted period.

11. The small base station of any of claims 8 to 10, wherein the operation mode management unit sets the operation mode as the sleep mode if the connection statuses of terminals connected to the small base station are determined to be connected to the small base station through wires, and no terminal registered in the small base station is located in a cell area of the small base station.

12. The small base station of any of claims 8 to 11, wherein the operation mode management unit sets the operation mode as the sleep mode if the connection statuses are determined to be that no terminal is connected to the small base station and no terminal registered in the small base station is located in a cell area of the small base station.

13. The small base station of any of claims 8 to 12, wherein the operation mode management unit determines the connection statuses of the terminals if a terminal registered in the small base station is newly connected to the small base station wirelessly or through wires.

14. The small base station of any of claims 8 to 13, wherein the operation mode management unit determines the connection statuses of the terminals if a connection status of one of the terminals is changed or a connection is released,
the change of the connection status of the one of the terminals preferably including a change from a wireless connection to a wired connection or a change from the wired connection to the wireless connection, the released connection optionally including a release of a connection of a wirelessly connected terminal, the release of the connection of the wirelessly connected terminal be determined based on whether a report from the terminal is received in the wireless communication unit.

15. The small base station of any of claims 8 to 14, wherein the operation mode management unit switches the operation mode of the small base station into an active mode if a request for a call connection to a terminal is received during the sleep mode or the idle mode, and wirelessly connects or connects through wires with the terminal by the wired communication unit and the wireless connection unit for communication.

16. The small base station of any of claims 8 to 15, further comprising at least on of:
a mobile communication controller to determine a handover in a cell area of the small base station,
a mobile communication route selector to select one of the wireless communication unit and the wired communication unit through which to provide a service to a terminal based on the determined connection status of the terminal,
an Internet Protocol (IP) communication controller to provide an IP communication service to a terminal, and
an Internet Protocol (IP) communication route selector to select one of the wireless communication unit and the wired communication unit through which to provide an IP communication service to a terminal based on the determined connection status of the terminal.
